# EUROPÄISCHE PATENTANMELDUNG

(11) **EP 4 733 641 A1**
(43) Veröffentlichungstag der Anmeldung: **29.04.2026**
(21) Anmeldenummer: 25210043.3
(22) Anmeldetag: 21.10.2025
(51) Int. Cl.: F16K 7/12, F16K 31/40, F16K 37/00

(54) **SERVOVENTIL ZUM STEUERN EINES FLUIDSTROMS**

(30) Priorität: 22.10.2024 DE 102024130787
(71) Anmelder: A. u. K. Müller GmbH & Co. KG, 40595 Düsseldorf (DE)
(72) Erfinder:
(74) Vertreter: Feder Walter Ebert

(57) **Zusammenfassung**

Die Erfindung betrifft ein Servoventil zum Steuern eines Fluidstroms, mit einem Hauptventil (2), welches ein Ventilgehäuse (4) mit einem Ventileinlass (5) und einem Ventilauslass (6) aufweist, die über einen mit einer Membran (7) schließbaren Ventilsitz (8) verbunden sind, und einer Vorsteuereinheit (3) zur Ansteuerung des Hauptventils (2), wobei mindestens eine Sensoreinheit (9) entlang des Strömungswegs zwischen dem Ventileinlass (5) und dem Ventilauslass (6) angeordnet ist.

## Beschreibung

Die Erfindung betrifft ein Servoventil zum Steuern eines Fluidstroms, mit einem Hauptventil, welches ein Ventilgehäuse mit einem Ventileinlass und einem Ventilauslass aufweist, die über einen mit einer Membran schließbaren Ventilsitz verbunden sind, und einer Vorsteuereinheit zur Ansteuerung des Hauptventils.

Solche Servoventile werden oftmals im Bereich der Sanitärtechnik zur Steuerung von Fluidströmen, insbesondere von Wasserströmen, eingesetzt. Beispielsweise kommen derartige Servoventile in Sanitärinstallationen oder Sanitärarmaturen zur Steuerung der Entnahme von Trinkwasser im privaten oder öffentlichen Bereich zum Einsatz.

Bei derartigen Servoventilen ist in der Regel ein Hauptventil vorgesehen, über welches der zu steuernde Fluidstrom wahlweise unterbrochen oder freigegeben werden kann. Das Hauptventil umfasst oftmals ein von dem Fluid durchströmbares Ventilgehäuse, das einen Ventileinlass, über welchen das Fluid in das Ventilgehäuse eintreten kann, und einen Ventilauslass, über welchen das Fluid das Ventilgehäuse verlassen kann, aufweist. Über den Ventileinlass ist das Servoventil in der Regel mit einer zulaufseitigen Fluidleitung verbunden. Über den Ventilauslass ist das Servoventil in der Regel mit einer ablaufseitigen Fluidleitung oder aber direkt mit einer Vorrichtung zur Entnahme des Fluids, wie einem Mundstück o. Ä., verbunden.

Der Ventileinlass und der Ventilauslass sind üblicherweise über einen Ventilsitz strömungstechnisch verbunden. Der Ventilsitz ist dabei in der Regel als eine von dem Fluid durchströmbare Öffnung ausgebildet, welche derart ausgebildet und angeordnet ist, dass diese über eine Membran verschlossen oder freigegeben werden kann. Je nach Stellung der Membran relativ zum Ventilsitz wird der Fluidfluss wahlweise entsprechend unterbrochen oder freigeben.

Die Stellbewegungen der Membran zwischen der Schließstellung und der Öffnungsstellung können entweder direkt geschaltet werden, beispielsweise über ein geeignetes Betätigungselement, etwa ein Handbetätigungselement, oder das Hauptventil kann über eine Vorsteuereinheit ansteuerbar sein. Eine solche Vorsteuereinheit hat sich in der Praxis für viele sanitäre Anwendungen als vorteilhaft herausgestellt, da sie ein zuverlässiges Schalten des Hauptventils mit vergleichsweise geringer Betätigungskraft ermöglichen kann. Der Öffnungs- und Schließvorgang der Membran wird bei Servoventilen mit Vorsteuereinheit nämlich durch das zu schaltende Fluid selbst unterstützt.

Insbesondere in hygienisch sensiblen Bereichen, etwa im Bereich der Trinkwasserversorgung, ist es oftmals vorteilhaft, eine solche Vorsteuereinheit zur Ansteuerung des Hauptventils einzusetzen, da hierdurch mit vergleichsweise geringem Aufwand eine berührungslose Betätigung des Servoventils und damit ein berührungsloses Steuern des Fluidstroms durch den Anwender ermöglicht werden kann. Zu diesem Zweck ist die Vorsteuereinheit in der Praxis oftmals als magnetgesteuerte Vorsteuereinheit ausgebildet.

Solche Servoventile haben sich im Sanitärbereich zum Steuern von Fluidströmen grundsätzlich bewährt. Für zahlreiche Anwendungen ist es jedoch zusätzlich zum Steuern des Fluidstroms erwünscht oder sogar notwendig, Informationen über den Fluidstrom oder das Fluid zu erlangen. So kann es etwa je nach Anwendungsfall erforderlich sein, die Temperatur oder den Druck des Fluids zu bestimmen oder aber eine Durchflussmenge des Fluids durch das Servoventil zu erfassen, da die entsprechenden Informationen zum Beispiel in einem Steuer- oder Regelkreis der zugehörigen Sanitärinstallation benötigt werden.

Zu diesem Zweck werden häufig vor- oder nachgeschaltet zu dem Servoventil entsprechende Sensoreinheiten vorgesehen. Diese Sensoreinheiten werden in der Praxis als separate Bauelemente entlang des Strömungswegs anström- oder abströmseitig des Servoventils angeordnet und fluidtechnisch mit diesem verbunden.

Bei der praktischen Umsetzung kann jedoch hinderlich sein, dass mit einer im Strömungsweg vor- oder nachgeschalteten Sensoreinheit in aller Regel ein nicht unerheblich erhöhter Bauraumbedarf einhergeht. Etwa in sanitären Armaturen, deren für die Installation von Fluidelementen zur Verfügung stehenden freien Innenräume aus technischen oder auch ästhetischen Gründen oftmals eng bemessen sind, lassen sich Servoventile und die zugehörigen Sensoreinheiten daher oftmals nicht oder nur mit größerem Änderungsaufwand integrieren.

Vor diesem Hintergrund stellt sich die Erfindung die Aufgabe , ein Servoventil anzugeben, welches die Möglichkeit der sensortechnischen Erfassung von Informationen über das Fluid oder den Fluidstrom bietet und zugleich platzsparend verbaut werden kann.

Diese Aufgabe wird bei einem Servoventil der eingangs genannten Art durch die Merkmale des Patentanspruchs 1 gelöst. Vorteilhafte Weiterbildungen sind in den abhängigen Unteransprüchen angegeben.

Dadurch, dass mindestens eine Sensoreinheit entlang des Strömungswegs zwischen dem Ventileinlass und dem Ventilauslass angeordnet ist, ergibt sich eine vorteilhaft kompakte Bauform des Servoventils, welche zugleich die Möglichkeit der Erfassung von Informationen über das Fluid oder den Fluidstrom bietet. Es ergibt sich eine Integration der Sensoreinheit in das Servoventil, dem insoweit eine Doppelfunktion zukommt, was auch eine kompakte und damit platzsparende Bauweise erlaubt.

**In** einer vorteilhaften Weiterbildung der Erfindung wird vorgeschlagen, dass die mindestens eine Sensoreinheit zwischen dem Ventileinlass und dem Ventilsitz und/oder zwischen dem Ventilsitz und dem Ventilauslass angeordnet ist. Die Sensoreinheit kann anström- und/oder abströmseitig des Ventilsitzes angeordnet sein. Es ergibt sich eine kompakte, platzsparende Konstruktion, welche auch eine vorteilhaft gute Zugänglichkeit der Sensoreinheit zu dem entlang des Strömungswegs fließenden Fluid gestattet.

Es hat sich als vorteilhaft erwiesen, wenn die mindestens eine Sensoreinheit zumindest teilweise lösbar mit dem Ventilgehäuse verbunden ist. Eine Verbindung der Sensoreinheit mit dem Ventilgehäuse erlaubt eine exakte und definierte Positionierung der Sensoreinheit, insbesondere relativ zu dem zu dem messtechnisch zu erfassenden Fluidstrom. Eine zumindest teilweise lösbare Verbindung der Sensoreinheit mit dem Ventilgehäuse, etwa eine lösbare Befestigung eines oder mehrerer Komponenten der Sensoreinheit an dem Ventilgehäuse, kann eine einfache und bedienerfreundliche Austauschbarkeit dieser Komponenten ermöglichen. Von Vorteil kann in diesem Zusammenhang insbesondere eine werkzeuglos lösbare Befestigung der Komponenten der Sensoreinheit an dem Ventilgehäuse sein, beispielsweise über eine Klemm- oder Rastverbindung. Alternativ kann die Sensoreinheit auch wartungsfreundlich fest an dem Servoventil verbaut sein.

Ferner wird vorgeschlagen, dass die mindestens eine Sensoreinheit als Durchflussmesser, Druckmesser oder Temperaturmesser ausgebildet ist. Eine derartige Ausgestaltung erlaubt die Erfassung des Volumenstroms, des Drucks oder der Temperatur des durch das Ventilgehäuse strömenden Fluids. Alternativ oder zusätzlich können je nach Anwendungsfall auch anderweitige Sensoreinheiten zur Erfassung von bestimmten physikalischen, chemischen oder stofflichen Eigenschaften des Fluids oder des Fluidstroms vorgesehen sein.

Es hat sich als vorteilhaft herausgestellt, wenn die mindestens eine als Durchflussmesser ausgebildete Sensoreinheit ein im fluiddurchströmten Bereich angeordnetes Flügelrad und einen außerhalb des fluiddurchströmten Bereichs angeordneten Sensor zur Erfassung von Bewegungen des Flügelrads aufweist. Ein derartig ausgebildeter Durchflussmesser erlaubt eine präzise und auch bei unterschiedlichen Strömungsgeschwindigkeiten robuste Erfassung der Durchflussmenge des Fluids. Das in dem fluiddurchströmten Bereich angeordnete Flügelrad ist direkt in dem zu messenden Medium angeordnet, wodurch Messungenauigkeiten reduziert werden. Ferner kann das Flügelrad durch das Ventilgehäuse gegenüber Umwelteinflüssen geschützt werden. Der außerhalb des fluiddurchströmten Bereichs angeordnete Sensor zur Erfassung von Bewegungen des Flügelrads ist für Bedienpersonal leicht zugänglich und kann auf einfache Art und Weise elektrisch kontaktiert werden. Zudem lassen sich die von dem Sensor ausgegebenen Daten auf einfache Art und Weise kabelgebunden oder kabellos weiterleiten, etwa an eine Auswerteeinheit. Auf dieser Weise kann die Sensoreinheit auch in einen Steuer- oder Regelkreis zur Steuerung des Servoventils oder der entsprechenden sanitären Installation eingebunden sein. Vorteilhaft ist in diesem Zusammenhang, wenn der Sensor zur Erfassung von Bewegungen des Flügelrads berührungslos arbeitet.

**In** diesem Zusammenhang wird vorgeschlagen, dass das Flügelrad eine sich entlang des Strömungswegs erstreckende Welle und mehrere Flügel aufweist, welche sich von der Welle in radialer Richtung quer oder schräg zum Strömungsweg erstrecken. Bei einer solchen Ausgestaltung lässt sich das Flügelrad auf einfache Art und Weise durch den Fluidstrom in Rotation versetzen. Wenn das Fluid vor dem Durchströmen der Sensoreinheit bereits in Rotation versetzt wurde, können die Flügel sich geradlinig quer zum Strömungsweg von der Welle erstrecken, da das Fluid aufgrund dessen Eigenrotation oder Drall die Flügelflächen anströmt. Wenn das Fluid jedoch geradlinig durch die Sensoreinheit strömt, ist es von Vorteil, wenn die Flügel sich schaufelartig schräg zur Strömungsrichtung erstrecken, wodurch der geradlinige Fluidstrom in der Sensoreinheit in eine Rotation des Flügelrads umgewandelt werden kann.

Es hat sich in diesem Zusammenhang als konstruktiv vorteilhaft erwiesen, wenn die Welle in radialer Richtung über eine an dem Ventilgehäuse vorgesehene erste Lagerstelle und eine an einem Lagereinsatz vorgesehene zweite Lagerstelle drehbar gelagert ist. Über diese radialen Lagerstellen lässt sich eine zuverlässige radiale Lagerung der Welle sicherstellen. Zudem erlaubt eine derartige Lagerung eine möglichst leichtgängige, reibungsarme Rotation der Welle um ihre Längsachse.

Es wird darüber hinaus vorgeschlagen, dass die Welle in axialer Richtung über mindestens ein Axiallager gelagert ist. Es ergibt sich eine zuverlässige Axiallagerung der Welle, wobei die leichtgängige Drehbarkeit der Welle möglichst wenig beeinflusst wird. Vorteilhafterweise sind die Axiallager derart im Bereich der ersten und zweiten Lagerstelle angeordnet, dass diese zur Axiallagerung mit den Stirnseiten der Welle zusammenwirken können. Das Axiallager kann etwa von zylindrischer, scheibenförmiger oder kugelförmiger Geometrie sein.

**In** einer bevorzugten Ausführungsform ist die erste Lagerstelle über mehrere sich balken-, kreuz- oder sternförmig quer zum Strömungsweg erstreckende Speichen einstückig an dem Ventilgehäuse angeordnet. Durch eine solche Ausgestaltung kann die Welle auf vorteilhafte Art und Weise um ihre Längsachse drehbar in dem fluiddurchströmten Bereich gelagert werden. Zudem ergeben sich Vorteile für eine leicht zugängliche Montage, beispielsweise durch den Ventileinlass oder den Ventilauslass. Zugleich kann über die Speichen sichergestellt werden, dass der durchströmbare Querschnitt des Ventilgehäuses aufgrund der ersten Lagerstelle nicht übermäßig verkleinert ist. Bevorzugterweise kann die erste Lagerstelle über zwei, drei, vier oder mehr, insbesondere symmetrisch angeordnete, Speichen einstückig an dem Ventilgehäuse angeordnet sein.

Es wird vorgeschlagen, dass der Lagereinsatz über den Ventileinlass oder den Ventilauslass in das Ventilgehäuse einsetzbar ist. Hierdurch lässt sich die Montage der Sensoreinheit auf bedienerfreundliche Art und Weise vereinfachen. Insbesondere kann zunächst das Flügelrad durch den Ventileinlass oder den Ventilauslass in das Ventilgehäuse eingesetzt werden, so dass ein freies Ende der Welle an der ersten Lagerstelle gelagert ist. Anschließend kann der Lagereinsatz in das Ventil eingesetzt werden, so dass das andere Ende der freie Welle über die zweite Lagerstelle gelagert werden kann. Es kann im Hinblick auf eine robuste, störungsarme Lagerung der Welle von Vorteil sein, wenn der Lagereinsatz unlösbar über den Ventileinlass oder den Ventilauslass in das Ventilgehäuse einsetzbar ist. Der Lagereinsatz kann beispielsweise über eine separate Sicherungsscheibe gegenüber dem Ventilgehäuse gesichert sein. Es ergibt sich ein wartungsarmer Aufbau. Alternativ kann der Lagereinsatz auch lösbar über den Ventileinlass oder den Ventilauslass in das Ventilgehäuse einsetzbar sein. Durch eine solche Ausgestaltung kann der Lagereinsatz bei Bedarf auf zeitsparende Weise ausgetauscht werden, etwa mit entsprechenden Demontagehilfsmitteln.

**In** diesem Zusammenhang wird ferner ein an dem Ventilgehäuse vorgesehener, mit dem Lagereinsatz zusammenwirkender Positionierabsatz vorgeschlagen. Über einen solchen Positionierabsatz lässt sich der Lagereinsatz auf bedienerfreundliche Art und Weise exakt an der dafür vorgesehenen Stelle positionieren. Ferner erlaubt der Positionierabsatz, dass ein vorgegebenes oder gewünschtes Lagerspiel der Welle in axialer Richtung zuverlässig eingehalten werden kann. Die Welle lässt sich somit verschleißarm und leichtgängig drehbar lagern.

In einer vorteilhaften Weiterbildung der Erfindung wird vorgeschlagen, dass der Lagereinsatz als Richtungsgeber zur Lenkung des Fluidstroms auf das Flügelrad ausgebildet ist. Durch eine solche Ausgestaltung lässt sich der Fluidstrom beim Durchströmen des Lagereinsatzes in Rotation versetzen. Der Lagereinsatz kann insoweit eine vorteilhafte Doppelfunktion erfüllen. Wenn der Lagereinsatz als Richtungsgeber ausgebildet ist, kann auf eine schaufelartige Gestaltung der Flügel des Flügelrads verzichtet werden. Bevorzugt weist der als Richtungsgeber ausgebildete Lagereinsatz mehrere schaufelartige Leitelemente auf, über welche der Fluidstrom beim Durchströmen in Rotation versetzt werden kann.

In einer vorteilhaften Ausgestaltung der Welle wird vorgeschlagen, dass diese mehrere axial voneinander getrennte Wellensegmente aufweist. Bei einer solchen Ausgestaltung kann zwischen den axial voneinander getrennten Wellensegmenten auf einfache Art und Weise ein Funktionselement angeordnet werden, welches zudem die Rotationseigenschaften der Welle nur wenig oder gar nicht beeinflusst. Konstruktiv bevorzugt ist ein symmetrischer Aufbau mit beispielsweise zwei axial voneinander getrennten Wellensegmenten. Überdies lässt sich das Flügelrad auf einfache Art und Weise montieren, wenn voneinander getrennte Wellensegmente vorgesehen sind.

Im Hinblick auf eine berührungslose Erfassung der Drehbewegungen des Flügelrads hat es sich als vorteilhaft erwiesen, wenn das Flügelrad zumindest teilweise magnetische Eigenschaften aufweist und der Sensor zur Erfassung von Magnetfeldern ausgebildet ist. Die Erfassung von sich infolge der Rotation des Flügelrads ändernden Magnetfeldern, beispielsweise über einen Hall-Sensor, kann dabei eine genaue, berührungslose Durchflussmessung ermöglichen.

Es ist in diesem Zusammenhang bevorzugt, wenn das Flügelrad einen Magneteinsatz aufweist, welcher zwischen zwei Wellensegmenten angeordnet ist. Vorteilhaft ist eine Anordnung, bei welcher sich die Ausrichtung des Magneteinsatzes je nach Drehstellung des Flügelrads ändert, was mittels des Sensors detektiert werden kann. Durch die Anordnung zwischen den beiden Wellensegmenten kann sich ein vorteilhaft symmetrischer Aufbau des Flügelrads ergeben. Insbesondere kann die Drehachse des Flügelrads mit der Schwerpunktachse zusammenfallen, so dass eine Unwucht bei dessen Rotation vermieden werden kann. Der Magneteinsatz kann bevorzugt in einer korrespondierend ausgebildeten Magneteinsatzaufnahme angeordnet sein.

Konstruktiv ist es in diesem Zusammenhang von Vorteil, wenn der Magneteinsatz derart ausgebildet und angeordnet ist, dass sich dieser im Wesentlichen quer zum Strömungsweg erstreckt. Bei einer derartigen Anordnung kann sich der Magneteinsatz insbesondere quer zur sich entlang des Strömungswegs erstreckenden Welle erstrecken, so dass die Pole des Magneteinsatzes eine Umlaufbahn um die Welle beschreiben, wenn diese rotiert. Es resultiert eine auf vorteilhafte Weise über den Sensor erfassbare, kontinuierliche Änderung des mit dem Magneteinsatz verknüpften Magnetfelds. Es ist in diesem Zusammenhang ferner bevorzugt, wenn der Magneteinsatz als zylindrischer Körper ausgeführt und mittig zwischen den beiden Wellensegmenten angeordnet ist.

Eine weitere vorteilhafte Weiterbildung der Erfindung sieht vor, dass das Ventilgehäuse einen Befestigungsbereich zur lösbaren Befestigung des Sensors aufweist. Über den Befestigungsbereichs lässt sich der Sensor exakt und wiederholgenau positionieren, insbesondere relativ zu dem im fluiddurchströmten Bereich angeordneten Flügelrad, dessen Position von außen nicht ohne Weiteres erkennbar ist. Bevorzugt weist der Befestigungsbereich Positionierhilfen auf, welche auch ungeübtem Montagepersonal eine korrekte Befestigung des Sensors an dem Ventilgehäuse nur in einer einzigen Ausrichtung erlauben. Hierdurch wird eine qualitativ hochwertige und zuverlässige Erfassung der Drehbewegungen des Flügelrads ermöglicht, selbst wenn der Sensor ausgetauscht werden muss. Aufwendige Korrekturen von Fehlpositionierungen können effektiv vermieden werden. Zudem kann über den Befestigungsbereich ein unerwünschtes Lösen des Sensors, etwa in Folge von Erschütterungen oder Vibrationen, vermieden werden.

Im Hinblick auf die konstruktive Gestaltung des Ventilgehäuses hat es sich als vorteilhaft herausgestellt, wenn das Ventilgehäuse einen Grundkörper und einen Deckel aufweist. Es resultiert ein einfacher Aufbau, welcher fertigungs- und montagetechnische Vorteile mit sich bringen kann. Der Deckel kann insbesondere derart ausgebildet sein, dass dieser einen Hohlraum oberhalb der Membran nach oben hin begrenzt.

Des Weiteren hat es sich als konstruktiv vorteilhaft erwiesen, wenn der Grundkörper den Ventileinlass, den Ventilauslass und den dazwischen angeordneten Ventilsitz aufweist. Eine solche Ausgestaltung lässt sich einfach fertigen und kann sich auch für Handhabungs- und Montagezwecke als vorteilhaft erweisen.

Es wird ferner vorgeschlagen, dass der Grundkörper im Bereich des Ventileinlasses und/oder des Ventilauslasses Anschlussmittel zum Anschluss von Fluidleitungen aufweist. Über solche Anschlussmittel lassen sich Fluidleitungen bedienerfreundlich und auf zeitsparende Art und Weise an dem Grundkörper anschließen. Die Anschlussmittel können beispielsweise als Steckverbinder, Schraubgewinde, Flansche oder sonstige Anschlussmittel ausgebildet sein, welche sich dazu eignen, Fluidleitungen wie Rohre oder Schläuche an dem Grundkörper anzuschließen. Bevorzugt kann neben der mechanischen Befestigung der Fluidleitungen auch eine Dichtungsfunktion vorgesehen sein.

Vorteilhaft ist in diesem Zusammenhang ferner, wenn der Grundkörper einstückig ausgebildet ist. Es ergibt sich eine gleichsam fertigungs- wie montagefreundliche Ausgestaltung, bei welcher die Komponenten des Grundkörpers verliersicher ausgestaltet sind. Zudem können Dichtungsprobleme durch eine einstückige Ausgestaltung des Grundkörpers vermieden werden, da keine Übergangsstellen zwischen den Komponenten existieren. Auch der Deckel kann einstückig ausgebildet sein, was dieselben Vorteile mit sich bringt.

Es wird vorgeschlagen, dass die Membran zwischen dem Grundkörper und dem Deckel festgelegt ist. Auf diese Weise lässt sich die Membran zuverlässig und positionsgetreu festlegen. Ferner ist die Festlegung zwischen Grundkörper und Deckel auch im Hinblick auf eine einfache Montage und/oder einen einfachen Austausch, etwa im Falle eines Defekts, vorteilhaft. Die Membran kann insbesondere in einem radial außenliegenden Bereich zwischen Grundkörper und Deckel eingespannt sein. Bevorzugt kann eine Ausgestaltung sein, bei welcher die Membran derart zwischen Grundkörper und Deckel festgelegt ist, dass sie einen Raum unterhalb der Membran von einem Raum oberhalb der Membran abdichtet.

**In** diesem Zusammenhang kann es von Vorteil sein, wenn der Grundkörper und der Deckel über eine Flanschverbindung miteinander verbunden sind. Bevorzugt ist eine fluiddichte Flanschverbindung, welche beispielsweise über mehrere Klemmelemente umgesetzt sein kann, über welche Flanschflächen des Grundkörpers gegenüber korrespondierenden Flanschflächen des Deckels verspannt werden können.

**In** einer vorteilhaften Weiterbildung der Erfindung wird vorgeschlagen, dass die Membran mit einem Schließelement verbunden ist. Das Schließelement kann insbesondere in einem radial innenliegenden Bereich mit der Membran verbunden sein, etwa über eine formschlüssige Verbindung. Mittels des Schließelements kann eine einfache, zuverlässige Führung der Stellbewegungen der Membran entlang der Stellrichtung erreicht werden. Zudem erlaubt das Schließelement in Verbindung mit der Membran ein dichtes Verschließen des Ventilsitzes.

Es ist in diesem Zusammenhang ferner bevorzugt, wenn die Membran über ein an dem Deckel abgestütztes Rückstellelement vorgespannt ist. Durch eine solche Ausgestaltung lässt sich die Abdichtung des Ventilsitzes in der Schließstellung der Membran verbessern, wenn die Membran in Richtung ihrer Schließstellung vorgespannt ist. Alternativ kann die Membran auch in Richtung ihrer Öffnungsstellung vorgespannt sein, wodurch die Freigabe des Ventilsitzes unterstützt werden kann. Eine Anordnung des Rückstellelements zwischen Membran und Deckel ist auch im Hinblick auf eine einfache Austauschbarkeit vorteilhaft. Das Rückstellelement kann dabei als Feder, insbesondere als Schraubenfeder, ausgebildet sein.

**In** einer montagefreundlichen Weiterbildung der Erfindung wird vorgeschlagen, dass die Vorsteuereinheit zumindest teilweise von dem Deckel aufgenommen ist. Hierdurch lässt sich die Vorsteuereinheit auf einfache Weise zuverlässig an dem Deckel lagern. Zudem können Dichtungsschwierigkeiten vermieden werden. Die Vorsteuereinheit kann insbesondere in eine an dem Deckel angeordneten Aufnahme einsteckbar sein. Bevorzugt ist die Aufnahme derart ausgebildet und angeordnet, dass die Vorsteuereinheit quer zur Stellrichtung der Membran in die Aufnahme einsteckbar ist.

**In** Bezug auf die Vorsteuereinheit wird ferner vorgeschlagen, dass diese ein magnetbetätigtes Vorsteuerelement aufweist, welches derart ausgebildet und angeordnet ist, dass es mit einer Vorsteuerbohrung dichtend zusammenwirkt. Das Vorsteuerelement kann durch Bestromung einer Magnetspule betätigt werden und zwischen einer die Vorsteuerbohrung verschließenden Schließstellung und einer die Vorsteuerbohrung freigebenden Öffnungsstellung bewegt werden. Hierbei kann eine bistabile Betätigung bevorzugt sein, bei welcher das Vorsteuerelement durch impulsartige Bestromung der Spule zwischen zwei stabilen Endlagen hin und her bewegbar ist. Die Vorsteuereinheit kann insbesondere über daran ausgebildete Versorgungsleitungen mit Energie versorgt werden, oder über einen geeigneten Energiespeicher, beispielsweise einer Batterie. Ferner kann die Vorsteuereinheit in ein Steuerungs- oder Regelungssystem des Servoventils oder der Sanitärinstallation eingebunden sein.

Eine vorteilhafte Ausgestaltung der Erfindung sieht vor, dass das Vorsteuerelement quer zu der Stellrichtung der Membran bewegbar angeordnet ist. Auf diese Weise kann ein platzsparende Aufbau des Servoventils umgesetzt werden. Bevorzugt kann sich eine Vorsteuerachse, entlang welcher das Vorsteuerelement quer zur Stellrichtung der Membran bewegbar ist, parallel zu einer Strömungsrichtung des Servoventils erstrecken.

Es wird ferner vorgeschlagen, dass das Servoventil eine Energieversorgungseinheit aufweist, welche mit der Vorsteuereinheit und/oder dem Sensor elektrisch verbunden ist. Über die Energieversorgungseinheit können die Vorsteuereinheit und/oder der Sensor mit der notwendigen elektrischen Energie zum Betrieb versorgt werden. Dabei kann die Energieversorgungseinheit etwa als Batterieeinheit ausgebildet sein.

Konstruktiv vorteilhaft ist eine Ausgestaltung, bei welcher sich der Ventileinlass und der Ventilauslass entlang der Strömungsrichtung parallel oder koaxial zueinander erstrecken. Insbesondere bei einer koaxialen Erstreckung oder einem geringen Parallelversatz von Ventileinlass und -auslass lässt sich auf bauraumsparende Weise ein Axialventil umsetzen. Ein derart ausgebildetes Servoventil lässt sich vergleichsweise einfach auch in beengte Armaturen einbauen.

**In** diesem Zusammenhang wird vorgeschlagen, dass der Ventilauslass entlang der Stellrichtung der Membran parallelversetzt zu dem Ventileinlass angeordnet ist. Es können sich Vorteile im Hinblick auf einen leicht zugänglichen Anschluss von zuström- oder abströmseitigen Fluidleitungen ergeben.

Überdies wird vorgeschlagen, dass die Vorsteuereinheit parallelversetzt zu dem Ventilauslass angeordnet ist. Eine platzsparende Konstruktion kann sich ergeben, wenn die Vorsteuereinheit entgegengesetzt dem Ventilauslass parallelversetzt zu dem Ventileinlass ausgebildet ist. Es ergibt sich eine Konstruktion, bei welcher eine Einströmachse entlang der Stellrichtung der Membran zwischen einer Ausströmachse und der Vorsteuereinheit angeordnet ist.

Weitere Einzelheiten und Vorteile eines erfindungsgemäßen Servoventils werden nachfolgend unter Zuhilfenahme der beigefügten Zeichnungen von Ausführungsbeispielen erläutert. Darin zeigen, teilweise in geschnittener Ansicht:
- Fig. 1: eine Seitenansicht einer Sanitäranordnung umfassend ein Servoventil und einer dem Servoventil vorgeschalteten Sensoreinheit des Stands der Technik;
- Fig. 2: eine Seitenansicht eines erfindungsgemäßen Servoventils;
- Fig. 3a: eine teilweise geschnittene Seitenansicht des Servoventils gemäß Fig. 2;
- Fig. 3b: eine teilweise geschnittene Draufsicht des Servoventils gemäß Fig. 2;
- Fig. 4: eine perspektivische, teilweise Explosionsdarstellung des Servoventils gemäß Fig. 2;
- Fig. 5a bis c: verschiedene Ansichten eines Lagereinsatzes gemäß der Darstellung in Fig. 4;
- Fig. 6: eine perspektivische Ansicht eines Flügelrads gemäß der Darstellung in Fig. 4;
- Fig. 7a: eine teilweise geschnittene Ansicht des Ventilgehäuses quer zur Einströmachse im Bereich der Sensoreinheit;
- Fig. 7b: eine perspektivische Rückansicht des Ventilgehäuses im Bereich der Sensoreinheit;
- Fig. 7c: eine Schnittansicht des Ventilgehäuses quer zur Einströmachse im Bereich der ersten Lagerstelle;
- Fig. 8a bis d: verschiedene Ansichten unterschiedlicher Anschlussmittel zum Anschluss von Fluidleitungen an dem Servoventil;
- Fig. 9: eine ausschnittsweise Seitenansicht des Ventilgehäuses im Bereich des Ventilauslasses, und
- Fig. 10a und b: zwei teilweise geschnittene Ansichten eines Sensors.

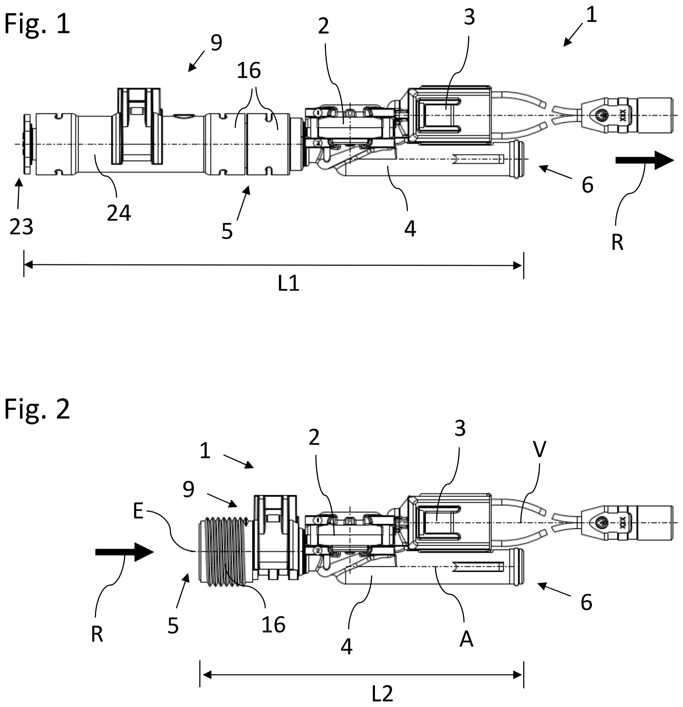

Die Darstellung in Fig. 1 zeigt in einer seitlichen Ansicht eine Sanitäranordnung umfassend ein Servoventil 1 und eine Sensoreinheit 9, wie sie aus dem Stand der Technik bekannt ist. Die Sanitäranordnung kann etwa in eine sanitäre Entnahmearmatur für Trinkwasser eingebaut sein. Das Servoventil 1 dient dem Steuern eines Fluidstroms und umfasst ein Hauptventil 2, welches ein Ventilgehäuse 4 mit einem Ventileinlass 5 und einem Ventilauslass 6 aufweist. Das Hauptventil 2 ist über eine separate Vorsteuereinheit 3 ansteuerbar.

Dem Servoventil 1 vorgeschaltet ist eine Sensoreinheit 9, über welche Eigenschaften und/oder Zustände des Fluidstroms und/oder des Fluids detektiert werden können. Bei der Sensoreinheit 9 handelt es sich um einen Durchflussmesser zur Bestimmung des Volumenstroms des durch die Sanitäranordnung strömenden Fluids. Die Sensoreinheit 9 weist ein eigenes Gehäuse 24 auf und ist über Anschlussmittel 16 mit dem Ventileinlass 5 des Servoventils 1 verbunden. Der Darstellung gemäß Fig. 1 ist zu entnehmen, dass sich die Sanitäranordnung zwischen dem Einlass 23 des Gehäuses 24 der Sensoreinheit 9 und dem Ventilauslass 6 des Ventilgehäuses 4 über eine axiale Gesamtlänge L1 erstreckt.

Demgegenüber zeigt die Darstellung in Fig. 2 ein erfindungsgemäßes Servoventil 1, welches ebenfalls eine als Durchflussmesser ausgebildete Sensoreinheit 9 zum Detektieren von Eigenschaften und/oder Zuständen des Fluids und/oder des Fluidstroms umfasst, jedoch eine gegenüber der Sanitäranordnung gemäß der Darstellung in Fig. 1 erheblich reduzierte Gesamtlänge L2 zwischen den Ventileinlass 5 und dem Ventilauslass 6 aufweist. Die Sensoreinheit 9 ist in das Servoventil 1 integriert, so dass dieses eine Doppelfunktion zum Steuern des Fluidflusses und zum Erfassen von Eigenschaften des Fluids bzw. des Fluidstroms aufweist. Aufgrund der reduzierten Gesamtlänge L2 lässt sich das Servoventil 1 einfacher in Sanitärarmaturen einbauen, welche nur einen eingeschränkten Bauraum bieten, oder es kann Bauraum für andere Komponenten der Sanitäranordnung eingespart werden. Zugleich bleibt die Funktionalität der Sensoreinheit 9 erhalten.

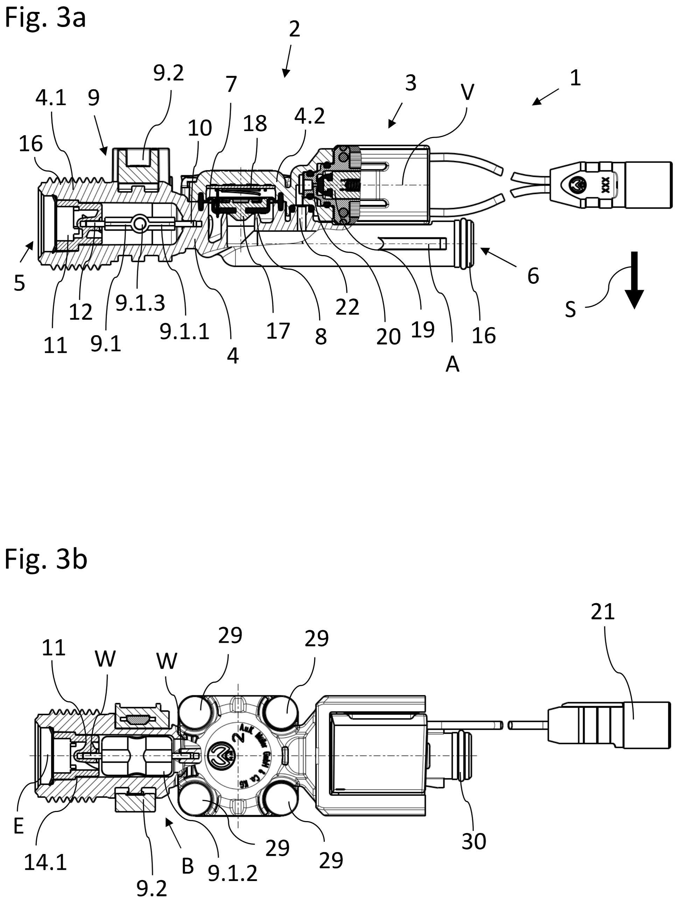

Nachfolgend wird die Funktionsweise des Servoventils 1 anhand der Darstellungen in Fig. 2 sowie 3a bis b erläutert.

Das Servoventil 1 umfasst ein Hauptventil 2 und eine Vorsteuereinheit 3 zur Ansteuerung des Hauptventils 2. Das Hauptventil 2 weist ein Ventilgehäuse 4 auf, welches einen Ventileinlass 5 und einen Ventilauslass 6 umfasst. Das Fluid tritt über den Ventileinlass 5 in das Ventilgehäuse 4 ein und strömt über den Ventilauslass 6 aus dem Ventilgehäuse 4 hinaus. Es ergibt sich eine hauptsächliche Strömungsrichtung R des Fluids, welche gemäß der Darstellung in Fig. 2 von links nach rechts verläuft.

Der Ventileinlass 5 und der Ventilauslass 6 sind über einen Ventilsitz 8 miteinander verbunden, vgl. Fig. 3a. Der Ventilsitz 8 ist in üblicher Weise als ringförmige Öffnung an dem Ventilgehäuse 4 ausgebildet. Mit dem Ventilsitz 8 wirkt eine Membran 7 derart zusammen, dass der Ventilsitz 8 über die Membran 7 wahlweise schließbar oder freigebbar ist. Die Darstellung gemäß Fig. 3a zeigt die Membran 7 in deren Schließstellung, in welcher der Ventilsitz 8 verschlossen ist. Ein entsprechender, radial innenliegender Dichtbereich der Membran 7 liegt in der Schließstellung von oben dichtend auf dem ringförmigen Ventilsitz 8 auf, so dass kein Fluid von dem Ventileinlass 5 zu dem Ventilauslass 6 strömen kann. Zwischen dem Ventilsitz 8 und dem Ventilauslass 6 erfolgt eine Umlenkung des Fluidstroms um etwa 90 Grad.

Zum Öffnen und Schließen des Servoventils 1, konkret des Hauptventils 2, ist die Vorsteuereinheit 3 vorgesehen. Die Vorsteuereinheit 3 weist ein Vorsteuerelement 19 auf, welches als magnetbetätigter Stößel ausgebildet ist. Das Vorsteuerelement 19 ist entlang einer Vorsteuerachse V durch Bestromung eines das magnetische Vorsteuerelement 19 umgebenden Elektromagneten zwischen einer Schließstellung und einer Öffnungsstellung bewegbar. **In** der Schließstellung dichtet eine Stirnseite des Vorsteuerelements 19 eine Vorsteuerbohrung 20 ab. Die für die Bestromung des Elektromagneten benötigte elektrische Energie wird über eine über eine Kabelverbindung angeschlossene Energieversorgungseinheit 21, beispielsweise eine Batterieeinheit, bereitgestellt, vgl. Fig. 3b.

Wenn das Vorsteuerelement 19 durch Bestromung der Magnetspule in dessen Öffnungsstellung bewegt wird, entfernt es sich von der Vorsteuerbohrung 20, so dass diese freigegeben wird. Infolge dessen ändern sich die Druckverhältnisse innerhalb des Servoventils 1. So fällt etwa der Druck in einer oberhalb der Membran 7 vorgesehenen Vorsteuerkammer ab, da durch das Öffnen der Vorsteuerbohrung 20 eine Strömungsverbindung zwischen der Vorsteuerkammer und einer Druckentlastungsbohrung 22 hergestellt ist. Über die Druckentlastungsbohrung 22 kann das Fluid in Richtung des Ventilauslasses 6 strömen. Aufgrund des nun geringeren Drucks in der Vorsteuerkammer hebt sich die Membran 7 entgegen der Stellrichtung S von dem Ventilsitz 8 ab und das Fluid kann von dem Ventileinlass 5 über den Ventilsitz 8 in den Ventilauslass 6 strömen. Das Servoventil 1 ist geöffnet.

Wenn das Vorsteuerelement 19 durch abermalige Bestromung der Magnetspule in dessen Schließstellung bewegt wird und die Vorsteuerbohrung 20 geschlossen wird, ändern sich die Druckverhältnisse erneut. Die Membran 7 bewegt sich aufgrund eines höheren Drucks in der Vorsteuerkammer entlang der Stellrichtung S auf den Ventilsitz 8 zu und verschließt diesen. Das Servoventil 1 ist geschlossen.

Zwischen dem Ventileinlass 5 und dem Ventilsitz 8 ist bei dem Servoventil 1 entlang des Strömungswegs eine Sensoreinheit 9 vorgesehen, deren Aufbau und Funktionsweise im Folgenden ebenfalls anhand der Darstellungen in Fig. 2, 3a und 3b erläutert wird.

Der Darstellung in Fig. 2 ist zu entnehmen, dass die Sensoreinheit 9 anströmseitig des Hauptventils 2 zwischen dem Ventileinlass 5 und dem Hauptventil 2 angeordnet ist. Die Sensoreinheit 9 schließt entlang der Einströmachse E axial an ein als Außengewinde an dem Ventilgehäuse 4 ausgebildetes Anschlussmittel 16 zum Anschluss einer Fluidleitung an.

Die Sensoreinheit 9 des Ausführungsbeispiels ist als Durchflussmesser zur Messung einer Durchflussmenge des Fluids ausgebildet. Alternativ kann die Sensoreinheit 9 jedoch als beliebige andere Einheit zur Erfassung einer physikalischen, chemischen oder stofflichen Eigenschaft des Fluids oder des Fluidstroms ausgebildet sein, beispielsweise als Temperaturmesseinheit oder Druckmesseinheit. Die Sensoreinheit 9 ist mehrteilig aufgebaut und weist ein im fluiddurchströmten Bereich des Servoventils 1 angeordnetes Flügelrad 9.1 und einen außerhalb des fluiddurchströmten Bereichs angeordneten Sensor 9.2 auf, vgl. Fig. 3a. Der Sensor 9.2 ist dabei so angeordnet, dass er die Bewegungen des Flügelrads 9.1 detektieren kann.

Das Flügelrad 9.1 ist derart in dem Strömungsweg im Inneren des Ventilgehäuses 4 angeordnet, dass es durch den entlang der Strömungsrichtung R strömenden Fluidstrom in Rotation versetzt werden kann. Die Rotation des Flügelrads 9.1 ist von dem Sensor 9.2 erfassbar. Aus den Daten über die Rotation des Flügelrads 9.1, insbesondere dessen Rotationsfrequenz, können Informationen bezüglich des Volumenstroms des Fluids gewonnen werden.

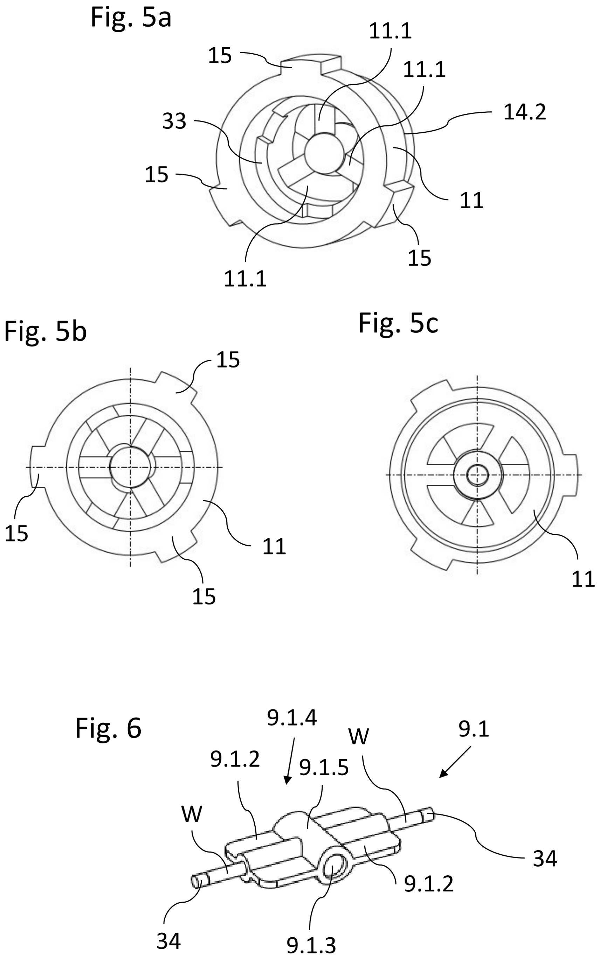

Nachfolgend wird unter Zuhilfenahme der Darstellungen gemäß Fig. 3a und 6 der Aufbau des Flügelrads 9.1 erläutert.

Das Flügelrad 9.1 umfasst eine zentrale Welle 9.1.1, welche sich entlang des Strömungswegs, nämlich entlang der Einströmachse E, erstreckt. Die Welle 9.1.1 ist zweiteilig aufgebaut und wird durch die beiden Wellensegmente W gebildet, vgl. Fig. 6. Mit der Welle 9.1.1 ist ein Rotorelement 9.1.4 drehfest verbunden. Die beiden Wellensegmente W der Welle 9.1.1 sind jeweils einseitig von hülsenartigen Abschnitten des Rotorelements 9.1.4 aufgenommen, so dass sich die Wellensegmente W axial (in diesem Fall entlang der Einströmachse E) zu beiden Seiten des Elements 9.1.4 erstrecken.

Das Rotorelement 9.1.4 des Flügelrads 9.1 weist ferner zwei Flügel 9.1.2 auf, welche sich beidseitig der Welle 9.1.1 in radialer Richtung im Wesentlichen quer zum Strömungsweg erstrecken. Wie dies der Darstellung in Fig. 6 entnommen werden kann, sind die Flügel 9.1.2 zweigeteilt aufgebaut. Die beiden Teile der Flügel 9.1.2 erstrecken sich zu beiden Seiten einer zentralen Querhülse 9.1.5 des Rotorelements 9.1.4. Es kann zwischen den beiden Flügeln 9.1.2 und der Einströmachse E ein Winkelversatz vorgesehen sein, wodurch sich verbesserte Anströmeigenschaften ergeben können.

In die zentrale, sich quer zur Längsachse erstreckenden Querhülse 9.1.5 des Rotorelements 9.1.4 ist ein zylindrischer Magneteinsatz 9.1.3 eingesetzt, vgl. Fig. 6. Der Magneteinsatz 9.1.3 ist im eingesetzten Zustand zentral zwischen den beiden Wellensegmenten W angeordnet und weist magnetische Eigenschaften auf. Der Magneteinsatz 9.1.3 erstreckt sich im Wesentlichen quer zum Strömungsweg, insbesondere quer zur Einströmachse E. Das Rotorelement 9.1.4 weist einen insgesamt symmetrischen Aufbau auf, so dass die Schwerpunktachse des Rotorelements 9.1.4 und damit des Flügelrads 9.1 mit der Drehachse des Flügelrads 9.1 zusammenfällt. Bei Rotation des Flügelrads 9.1 um die Drehachse, welche mit der Einströmachse E identisch ist, beschreiben die beiden entgegengesetzten Enden des zylindrischen Magneteinsatzes 9.1.3 eine im Wesentlichen kreisförmige Umlaufbahn um die zentrale Drehachse.

Nachfolgend wird insbesondere unter Zuhilfenahme der Fig. 3a und b erläutert, wie das Flügelrad 9.1 im Strömungsweg des Ventilgehäuses 4 gelagert ist.

Das Flügelrad 9.1 ist über die entgegengesetzten Enden der Welle 9.1.1 gelagert, vgl. Fig. 3a und 3b. Das dem Ventilsitz 8 zugewandte Ende der Welle 9.1.1 ist über eine an dem Ventilgehäuse 4 ausgebildete erste Lagerstelle 10 drehbar gelagert. An dem gegenüberliegenden, dem Ventileinlass 5 zugewandten Ende ist die Welle 9.1.1 über eine an einem Lagereinsatz 11 ausgebildete zweite Lagerstelle 12 drehbar gelagert. Beide Lagerstellen 10, 11 befinden sich im Wesentlichen in der Einströmachse E, vgl. Fig. 3a.

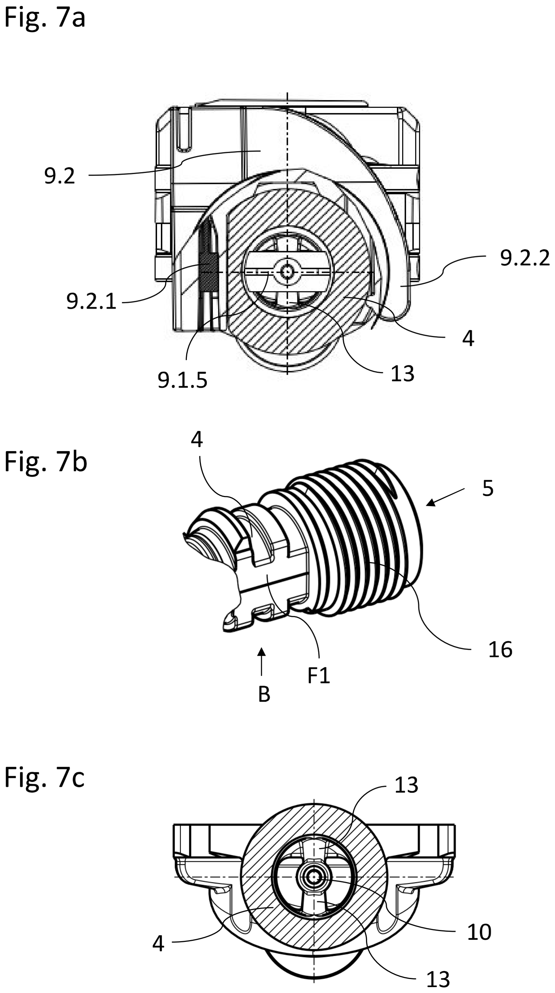

Die erste Lagerstelle 10 ist einstückig an dem Ventilgehäuse 4 angeordnet. Die Darstellung gemäß Fig. 7c zeigt eine Schnittansicht quer zur Strömungsrichtung R durch das Ventilgehäuse 4 im Bereich der ersten Lagerstelle 10. Es ist zu erkennen, dass die erste Lagerstelle 10 über zwei sich von der ersten Lagerstelle 10 radial speichenförmig quer zum Strömungsweg erstreckende Speichen 13 mit dem Ventilgehäuse 4 verbunden ist. Die Speichen 13 erstrecken sich auf gegenüberliegenden Seiten der Lagerstelle 10 quer zum Strömungsweg, gemäß der Darstellung in Fig. 7c nach oben und nach unten. Der Fluidstrom umströmt die Speichen 13, so dass er in diesem Bereich in zwei Teilströme aufgeteilt wird. Alternativ zu einer Ausgestaltung mit zwei Speichen 13 sind auch Ausgestaltungen mit 3, 4 oder mehr Speichen denkbar, welche sich kreuz- oder sternförmig radial von der ersten Lagerstelle 10 erstrecken können. Die erste Lagerstelle 10 ist als hülsenförmiges Lager ausgebildet, welches die darin eingesteckte Welle 9.1.1, bzw. das entsprechende Wellensegment W, radial abstützen kann.

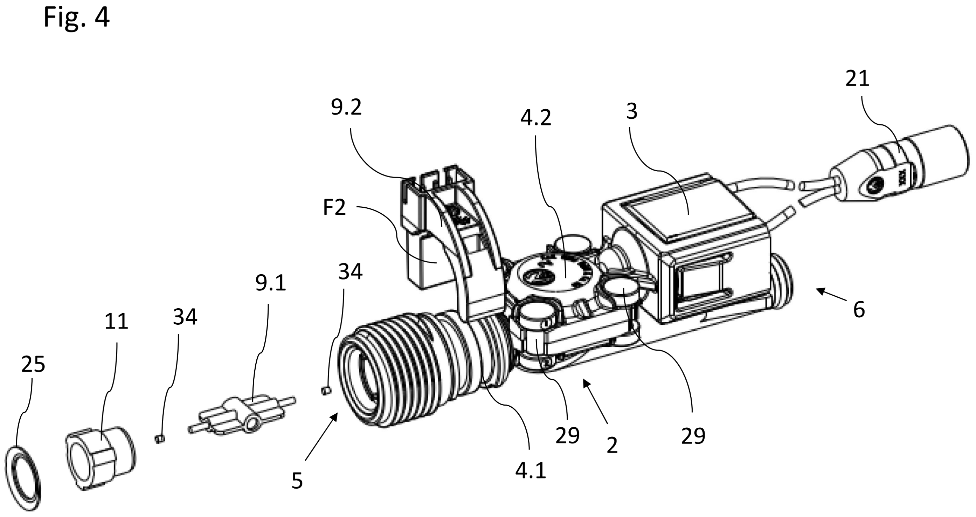

Zur axialen Abstützung der Welle 9.1.1 ist ein Axiallager 34 vorgesehen, vgl. Fig. 4 und 6. Das Axiallager 34 ist zwischen der endseitigen Wandung der ersten Lagerstelle 10 und dem stirnseitigen Ende der Welle 9.1.1 bzw. des Wellensegments W vorgesehen. Das insbesondere aus Edelstahl- oder Keramik ausgebildete Axiallager stützt die Welle 9.1.1 axial gegenüber dem Ventilgehäuse 4 ab.

Die zweite Lagerstelle 12 ist an einem zylindrischen Lagereinsatz 11 ausgebildet, welcher in den Darstellungen gemäß der Figuren 5a bis c in unterschiedlichen Ansichten gezeigt ist. Analog zu der ersten Lagerstelle 10 ist auch die zweite Lagerstelle 12 in einem zentralen Bereich des Lagereinsatzes 11 als hülsenförmiges Lager ausgebildet, welches die darin eingesteckte Welle 9.1.1, bzw. das entsprechende Wellensegment W, radial abstützen kann, vgl. auch Fig. 3a.

Der Lagereinsatz 11 ist über den Ventileinlass 5 in das Ventilgehäuse 4 einsetzbar. Wie dies der Explosionsdarstellung in Fig. 4 entnommen werden kann, ist der Lagereinsatz 11 erst nach dem Flügelrad 9.1 über den Ventileinlass 5 in das Ventilgehäuse 4 einsetzbar. Der Lagereinsatz 11 weist einen Außendurchmesser auf, welcher korrespondierend zu dem Innendurchmesser des Ventilgehäuses 4 ausgebildet ist. Ferner weist der Lagereinsatz 11 einen stufenförmigen, umlaufenden Positionierabsatz 14.2 auf, welcher als Anschlag zur korrekten Positionierung des Lagereinsatzes 11 dient. Der Positionierabsatz 14.2 wirkt mit einem korrespondierend ausgebildeten Positionierabsatz 14.1 welcher an dem Ventilgehäuse 4 ausgebildet ist, im Sinne eines Anschlagpaares zusammen, vgl. Fig. 3b. Über die als Anschlagpaar zusammenwirkenden Positionierabsätze 14.1, 14.2 ist auch das Lagerspiel der Welle 9.1.1 in axialer Richtung einstellbar.

Zur axialen Abstützung der Welle 9.1.1 gegenüber dem Lagereinsatz 11 ist ebenfalls ein Axiallager 34 vorgesehen, vgl. Fig. 4 und 6. Das Axiallager 34 ist zwischen der Wandung der zweiten Lagerstelle 12 und dem stirnseitigen Ende der Welle 9.1.1 bzw. des Wellensegments W vorgesehen. Das Axiallager 34 stützt die Welle 9.1.1 axial gegenüber dem Lagereinsatz 11 ab.

Zur Verdrehsicherung sind an dem Lagereinsatz 11 radial außen drei gleichmäßig um den Umfang verteilte Führungselemente 15 vorgesehen, vgl. Fig. 5a und b. Die Führungselemente 15 sind als nasenförmige, längliche Vorsprünge ausgebildet, welche sich in Strömungsrichtung R erstrecken. Die drei Führungselemente 15 greifen formschlüssig in korrespondierende, an der Innenwand des Ventilgehäuses 4 ausgebildete Führungselemente ein, welche entsprechend als Ausnehmungen oder Rücksprünge ausführt sind. Über die Führungselemente 15 lässt sich der Lagereinsatz 11 verdrehgesichtert in das Ventilgehäuse 4 einsetzen.

Am Innendurchmesser des Lagereinsatzes 11 ist ein weiterer umlaufender Anschlag 33 vorgesehen, vgl. Fig. 5a. Dieser Anschlag 33 dient als Einsteckbegrenzung für ein in den Lagereinsatz 11 eingestecktes Leitungselement, etwa ein Rohr- oder Schlauchende.

Als Axialsicherung ist eine Sicherungsscheibe 25 vorgesehen, welche mit dem der zweiten Lagerstelle 12 abgewandten Ende des Lagereinsatzes 11 zusammenwirkt, vgl. Fig. 4. Die Sicherungsscheibe 25 wird nach dem Lagereinsatz 11 über den Ventileinlass 5 in das Ventilgehäuse 4 eingesetzt. Über die Sicherungsscheibe 25 ist der Lagereinsatz 11 axial gegenüber dem Ventilgehäuse 4 gesichert. Eine werkzeuglose Demontage ist nicht möglich.

Der Lagereinsatz 11 dient nicht nur der radialen und axialen Lagerung der Welle 9.1.1 des Flügelrads 9.1, sondern zugleich als Richtungsgeber zur Lenkung des Fluidstroms auf die Flügel 9.1.2 des Flügelrads 9.1. Wie dies insbesondere der perspektivischen Darstellung gemäß Fig. 5b entnommen werden kann, weist der Lagereinsatz 11 zu diesem Zweck drei schaufelartige Leitelemente 11.1 auf, welche sich gekrümmt zum Strömungsweg erstrecken. Die Leitelemente 11.1 erstrecken sich in radialer Richtung zwischen der zweiten Lagerstelle 12 und einer Wand des Lagereinsatzes 11. Die Leitelemente 11.1 sind derart ausgebildet, dass das entlang der Strömungsrichtung R strömende Fluid in Umfangsrichtung abgelenkt und dadurch in Rotation versetzt wird. Das Fluid verlässt den Lagereinsatz 11 durch drei symmetrisch angeordnete, ringsegmentförmige Öffnungen. Dem Fluidstrom wird über die Leitelemente 11.1 ein Drehimpuls versetzt. Im Ergebnis strömt das Fluid hinter den Leitelementen 11.1 das Flügelrad 9.1 nicht geradlinig, sondern mit einer gewissen Eigenrotation an. Hierdurch lassen sich die im Wesentlichen geraden Flügelflächen der Flügel 9.1.2 flächig anströmen und das Flügelrad 9.1 kann entsprechend in Drehung versetzt werden.

Die Anzahl der Leitelemente 11.1 kann je nach Anwendungsfall auch reduziert oder erhöht sein. Bevorzugt sind Ausgestaltungen mit einer ungeraden Anzahl an Leitelementen 11.1, insbesondere fünf oder sieben Leitelementen 11.1. Im Hinblick auf die Vermeidung eines Anströmschattens ist eine Kombination einer ungeraden Anzahl an Leitelementen 11.1 mit einem Flügelrad 9.1, welches eine gerade Anzahl an Flügeln 9.1.2 aufweist, vorteilhaft. In diesem Fall ist ein sicherer Anlauf des Flügelrads 9.1 gewährleistet. Aufgrund der Rotation des Flügelrads 9.1 wird auch der daran angeordnete Magneteinsatz 9.1.3 in Drehung versetzt. Die Pole des Magneteinsatzes 9.1.3 beschreiben dabei eine Umlaufbahn um die Welle 9.1.1. Das sich infolgedessen ändernde Magnetfeld kann über einen in der Nähe positionierten, als Halldetektor ausgebildeten Sensor 9.2 erfasst werden, was nachfolgend zunächst anhand der Darstellungen in Fig. 3a, 3b und 4 erläutert wird.

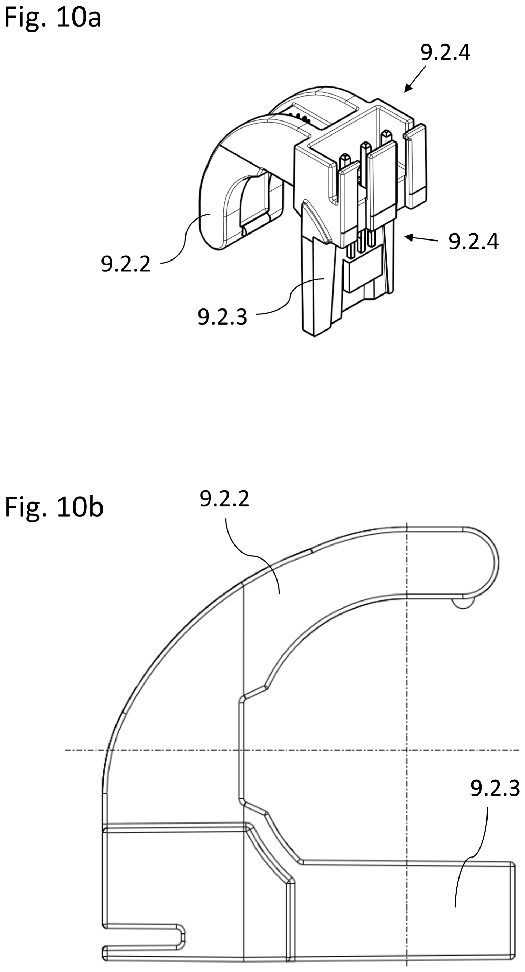

Die Explosionsdarstellung gemäß Fig. 4 zeigt, dass der Sensor 9.2 nach Art einer Klammer lösbar von oben auf das Ventilgehäuse 4 steckbar ist. Hierfür weist der Sensor 9.2 neben einem Sensorgehäuses 9.2.3 einen etwa bogenförmigen Klammerarm 9.2.2 auf, welcher mit dem Ventilgehäuse 4 außenseitig formschlüssig, insbesondere rastend, zusammenwirken kann, vgl. Fig. 10b. Um eine korrekte axiale und auch radiale Positionierung eines Sensorbereichs 9.2.1 des Sensors 9.2 relativ zu dem im Inneren des Ventilgehäuses 4 angeordneten Flügelrads 9.1 bzw. insbesondere dem Magneteinsatz 9.1.3 sicherzustellen, ist der Sensor 9.2 in einem Befestigungsbereich B des Ventilgehäuses 4 anordbar. Der Befestigungsbereich B erstreckt sich axial zwischen dem Ventileinlass 5 und dem Ventilsitz 8, vgl. Fig. 3a.

Anhand der Darstellungen in Fig. 7a und b ist zu erkennen, dass außenseitig am dem Ventilgehäuse 4 in dem Befestigungsbereich B eine sich im Wesentlichen vertikal erstreckende Führungsfläche F1 ausgebildet ist. Die Führungsfläche F1 dient der verdrehgesicherten Anordnung des Sensors 9.2 und wirkt mit einer korrespondierenden Führungsfläche F2 am Sensor 9.2 zusammen. Aufgrund der zusammenwirkenden Führungsflächen F1, F2 lässt sich das an dem Sensor 9.2 vorgesehene, als Hall-Sensorelement ausgebildetes Sensorelement 9.2.1 in direkter Nähe zu dem Magneteinsatz 9.1.3 positionieren, vgl. Fig. 7a. Das Sensorelement 9.2.1 ist im Inneren eines kastenförmigen Sensorgehäuses 9.2.3 des Sensors 9.2 angeordnet, wobei außenseitig an dem Sensorgehäuse 9.2.3 die Führungsfläche F2 vorgesehen ist, vgl. auch Fig. 10a.

Das Sensorgehäuse 9.2.3 ist von dessen Oberseite und Unterseite her zugänglich, vgl. Fig. 10a. Insbesondere kann der Sensor 9.2 über die Ober- und/oder Unterseite des Sensorgehäuses 9.2.3 elektrisch und datentechnisch kontaktiert werden. Hierfür sind Steckkontakte 9.2.4 vorgesehen, über welche eine Stromversorgung des Sensors 9.2 und/oder eine Übermittlung der Messdaten des Sensors 9.2 erfolgen kann. Bei den Messdaten kann es sich insbesondere um Daten handeln, welche die Zahl der Umdrehungen des Flügelrads 9.1 pro Zeiteinheit angeben. Aus diesen Messdaten können, etwa in einer integrierten oder separaten Auswerteeinheit, die Volumenströme des Fluids bestimmt werden. Es kann von Vorteil sein, wenn der Sensor 9.2 über die Energieversorgungseinheit 21 der Vorsteuereinheit 3 mit elektrischem Strom versorgbar ist, da in diesem Fall auf eine eigene Energieversorgungseinheit für den Sensor 9.2 verzichtet werden kann.

Nachfolgend werden Einzelheiten des Ventilgehäuses 4 erläutert.

Der Darstellung gemäß Fig. 3a und b ist zu entnehmen, dass das Ventilgehäuse 4 einen Grundkörper 4.1 und einen Deckel 4.2 aufweist. Sowohl der Grundkörper 4.1 als auch der Deckel 4.2 können aus einem technischen Kunststoff, insbesondere einem Polyamid, gefertigt sein. Der Grundkörper 4.1 ist einstückig ausgebildet und weist unter anderem den Ventileinlass 5, den Ventilauslass 6 und den Ventilsitz 8 auf. Zwischen dem Ventileinlass 5 und der ersten Lagerstelle 10 sowie zwischen dem Ventilsitz 8 und dem Ventilauslass 6 ist der Grundkörper 4.1 röhrenförmig ausgebildet. Die röhrenförmigen Abschnitt des Grundkörpers 4.1 erstrecken sich entlang der Strömungsrichtung R parallel zu einander. Der ablaufseitige röhrenförmige Abschnitt des Grundkörpers 4.1 ist entlang der Stellrichtung S der Membran 7 parallelversetzt zu dem einlaufseitigen röhrenförmigen Abschnitt des Grundkörpers 4.1 angeordnet, vgl. Fig. 3a.

Im Bereich des Ventileinlasses 5 und des Ventilauslasses 6 sind Anschlussmittel 16 zum Anschluss von Fluidleitungen an dem Grundkörper 4.1 vorgesehen, vgl. Fig. 3a. Diese können mit geeigneten Fluidleitungen, insbesondere Rohren und Schläuchen, oder anderen Sanitärbauteilen verbunden werden.

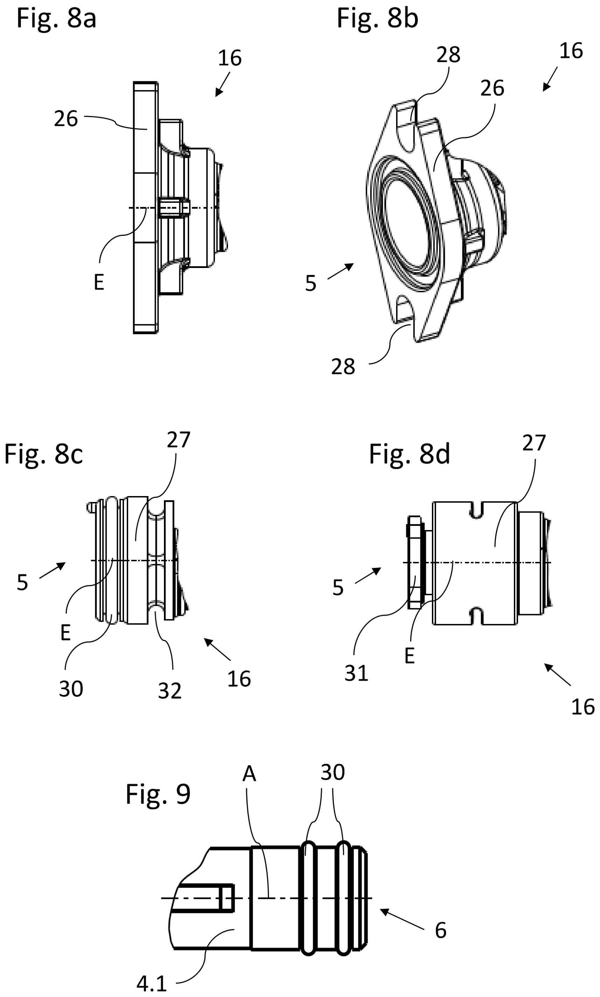

Die Darstellungen in Fig. 2 bis 4 sowie 7b zeigen, dass das anströmseitige Anschlussmittel 16 als Außengewinde an dem Ventilgehäuse 4, konkret dem Grundkörper 4.1, ausgebildet ist. Das Außengewinde 16 kann mit einem korrespondierenden Innengewinde, welches in der Regel an dem Anschluss oder Adapter einer entsprechenden Anschlussleitung angeordnet ist, verbunden werden. Alternativ kann das Anschlussmittel 16 sowohl im Bereich des Ventileinlasses 5 als auch im Bereich des Ventilauslasses 6 auch nach Art eines Flansches 26 (vgl. Fig. 8a und b) oder nach Art eines Steckverbinders 27 (vgl. Fig. 8c und d) ausgebildet sein.

Bei der Flanschvariante gemäß Fig. 8a und b sind an dem Flansch 26 zwei sich ober- und unterseitig gegenüberliegende bogenförmige Ausnehmungen 28 vorgesehen. Zwei stirnseitig aneinander anliegende Flansche 26 können über hantelförmige Befestigungselemente 29 miteinander verbunden werden, so wie diese gemäß den Darstellungen in Fig. 3b und 4 auch zur Befestigung des Deckels 4.2 an dem Ventilgehäuse 4.1 vorgesehen sind. Zur fluidtechnischen Abdichtung kann zwischen den Flanschen 26 ein geeignetes Dichtelement, etwa in Form eines O-Rings, vorgesehen sein.

Alternativ kann im Bereich des Ventileinlasses 5 oder des Ventilauslasses 6 als Anschlussmittel 16 auch eine Schnellkupplung vorgesehen sein, so wie diese am Beispiel des Ventileinlasses 5 in Fig. 8c und d gezeigt sind. Die Darstellung gemäß Fig. 8d zeigt dabei einen lösbaren Steckverbinder 27, in welchen axial (in diesem Fall von links kommend entlang der Einströmachse E nach rechts) ein Leitungsende, etwa ein Rohr- oder Schlauchende eingesteckt werden kann. Im Inneren des Steckverbinders 27 wird das Rohr- oder Schlauchende über eine Innenkontur des Halteelements 31 klemmend fixiert. Zum Lösen der Steckverbindung kann das Halteelement 31 axial gedrückt werden, wodurch das Rohr- oder Schlauchende freigeben wird und aus dem Steckverbinder 27 entfernt werden kann.

Die Darstellung gemäß Fig. 8c zeigt eine weitere Geometrie des Anschlussmittels 16, welche ebenfalls zum Herstellen einer lösbaren Steckverbindung geeignet ist. Das Anschlussmittel 16 ist dabei als Innengeometrie ausgeführt, welche in eine korrespondierende Außengeometrie eines in den Figuren nicht dargestellten Anschluss-Gegenstücks eingeführt werden kann. Es ist eine umlaufende Ausnehmung 32 vorgesehen, welche mit einem entsprechenden Sicherungsmittel, etwa einem Sicherungsring oder einer Sicherungsklammer, an dem Anschluss-Gegenstück zusammenwirken kann. Ferner weist das Anschlussmittel 16 gemäß Fig. 8c ein ringförmiges Dichtelement 30 zur Abdichtung auf.

Im Bereich des Ventilauslasses 6 ist ebenfalls ein Anschlussmittel 16 vorgesehen, welches im Ausführungsbeispiel der Darstellungen in Fig. 3a und b als einfacher Streckanschluss ausgebildet ist. Zur fluiddichten Abdichtung ist ein ringförmiges Dichtelement 30 im Bereich des Ventilauslasses 6 vorgesehen, vgl. Fig. 3b. Dieses erstreckt sich um den Außenumfang des Ventilgehäuses 4.1. In einer alternativen Ausgestaltung können parallelversetzt zwei ringförmige Dichtelemente 30 vorgesehen sein, vgl. Fig. 9. Hierdurch lässt sich die Dichtwirkung verstärken. Der ventilauslassseitige Steckanschluss gemäß Fig. 3a, 3b oder 9 kann beispielsweise in eine Schnellkupplung eingeführt werden, wie diese in Fig. 8d dargestellt ist.

Im Folgenden wird die Ausgestaltung des Deckels 4.2 des Ventilgehäuses 4 erläutert.

Der Deckel 4.2 begrenzt die oberhalb der Membran 7 ausgebildete Vorsteuerkammer. Die Membran 7 ist zwischen dem Grundkörper 4.1 und dem Deckel 4.2 des Ventilgehäuses 4 festgelegt, vgl. Fig. 3a. Die Membran 7 ist im Bereich ihres Außenumfangs zwischen dem Grundkörper 4.1 und dem Deckel 4.2 geklemmt. Hierfür weist die Membran 7 radial außen einen umlaufenden Klemmbereich auf, welcher sich in Stellrichtung S der Membran 7 erstreckt, vgl. Fig. 3a. In einem radial innenliegenden Bereich ist die Membran 7 mit einem starren Schließelement 17 formschlüssig verbunden, welches die Membran 7 stützt und deren Bewegungen unterstützt. Ferner ist die Membran 7 über ein als Feder ausgebildetes Rückstellelement 18 vorgespannt, welches sich in der Vorsteuerkammer zwischen dem Deckel 4.2 und einer Oberseite der Membran 7 erstreckt.

Der Deckel 4.2 des Ventilgehäuses 4 ist ebenfalls einstückig ausgebildet. Er ist über eine Flanschverbindung mit vier hantelförmigen Befestigungselementen 29, welche in einer Rechteckanordnung um das Hauptventil 2 herum angeordnet sind, an dem Grundkörper 4.1 befestigt. An dem Deckel 4.2 ist eine Aufnahme für die Vorsteuereinheit 3 angeordnet. Die Aufnahme erstreckt sich topfförmig quer zu der Stellrichtung S der Membran 7 und nimmt eine Seite der Vorsteuereinheit 3 zumindest teilweise auf, vgl. Fig. 3a. Die Vorsteuerbohrung 20 und das sich in dessen Schließstellung befindliche Vorsteuerelement 19 sind radial von der Aufnahme umschlossen. Die Magnetspule ist hingegen weitgehend außerhalb der Aufnahme angeordnet.

Im Folgenden wird anhand der Darstellung in Fig. 3a der Aufbau der Vorsteuereinheit 3 beschrieben.

Die Vorsteuereinheit 3 erstreckt sich entlang der Vorsteuerachse V, welche parallelversetzt sowohl zu der Einströmachse E als auch zu der Ausströmachse A angeordnet ist, vgl. Fig. 3a. **In** Stellrichtung S der Membran 7 unterhalb der Vorsteuereinheit 3 erstreckt sich ein ablaufseitiger Teil des Ventilgehäuses 4 entlang der Ausströmachse A. Zwischen der Vorsteuereinheit 3 und dem ablaufseitigen Teil des Ventilgehäuses 4 erstreckt sich in Stellrichtung S die Entlastungsbohrung 22.

Die Vorsteuereinheit 3 weist ein quaderförmiges Gehäuse auf, welches die Magnetspule einhaust. Über das der Vorsteuerbohrung 20 abgewandten Ende der Vorsteuereinheit 3 ist diese mit der Energieversorgungseinheit 21 kabelverbunden. Mittels der Energieversorgungseinheit 21 wird die Magnetspule mit Strom versorgt. Die Magnetspule umschließt das magnetische Vorsteuerelement 19 umfänglich. Durch Bestromung ist das Vorsteuerelement 19 bistabil zwischen der Schließstellung und der Öffnungsstellung verstellbar, wobei das Vorsteuerelement 19 quer zu der Stellrichtung S, entlang der Vorsteuerachse V, bewegbar ist.

Das vorstehend beschriebene Servoventil 1 zeichnet sich durch eine kompakte Bauform aus und bietet zugleich die Möglichkeit der sensortechnischen Erfassung von Informationen über das Fluid oder den Fluidstrom. Durch Integration der Sensoreinheit 9 in das Servoventil 1, kommt dem Servoventil 1 eine Doppelfunktion zu, was auch eine kompakte und damit platzsparende Bauweise erlaubt.

### Bezugszeichen:

- 1: Servoventil
- 2: Hauptventil
- 3: Vorsteuereinheit
- 4: Ventilgehäuse
- 4.1: Grundkörper
- 4.2: Deckel
- 5: Ventileinlass
- 6: Ventilauslass
- 7: Membran
- 8: Ventilsitz
- 9: Sensoreinheit
- 9.1: Flügelrad
- 9.1.1: Welle
- 9.1.2: Flügel
- 9.1.3: Magneteinsatz
- 9.1.4: Rotorelement
- 9.1.5: Querhülse
- 9.2: Sensor
- 9.2.1: Sensorelement
- 9.2.2: Klammerarm
- 9.2.3: Sensorgehäuse
- 9.2.4: Steckkontakt
- 10: Lagerstelle
- 11: Lagereinsatz
- 11.1: Leitelement
- 12: Lagerstelle
- 13: Speiche
- 14.1: Positionierabsatz
- 14.2: Positionierabsatz
- 15: Führungselement
- 16: Anschlussmittel
- 17: Schließelement
- 18: Rückstellelement
- 19: Vorsteuerelement
- 20: Vorsteuerbohrung
- 21: Energieversorgungseinheit
- 22: Entlastungsbohrung
- 23: Einlass
- 24: Gehäuse
- 25: Sicherungsscheibe
- 26: Flansch
- 27: Steckverbinder
- 28: Ausnehmung
- 29: Befestigungselement
- 30: Dichtelement
- 31: Halteelement
- 32: Ausnehmung
- 33: Anschlag
- 34: Axiallager

- A: Ausströmachse
- B: Befestigungsbereich
- E: Einströmachse
- F: Führungsfläche
- L1: Gesamtlänge
- L2: Gesamtlänge
- R: Strömungsrichtung
- S: Stellrichtung
- V: Vorsteuerachse
- W: Wellensegment

## Patentansprüche

1. Servoventil zum Steuern eines Fluidstroms, mit einem Hauptventil (2), welches ein Ventilgehäuse (4) mit einem Ventileinlass (5) und einem Ventilauslass (6) aufweist, die über einen mit einer Membran (7) schließbaren Ventilsitz (8) verbunden sind, und einer Vorsteuereinheit (3) zur Ansteuerung des Hauptventils (2),
**dadurch gekennzeichnet,**
**dass** mindestens eine Sensoreinheit (9) entlang des Strömungswegs zwischen dem Ventileinlass (5) und dem Ventilauslass (6) angeordnet ist.

2. Servoventil nach Anspruch 1, **dadurch gekennzeichnet, dass** die mindestens eine Sensoreinheit (9) zwischen dem Ventileinlass (5) und dem Ventilsitz (8) und/oder zwischen dem Ventilsitz (8) und dem Ventilauslass (6) angeordnet ist.

3. Servoventil nach einem der Ansprüche 1 oder 2, **dadurch gekennzeichnet, dass** die mindestens eine Sensoreinheit (9) zumindest teilweise lösbar mit dem Ventilgehäuse (4) verbunden ist.

4. Servoventil nach einem der Ansprüche 1 bis 3, **dadurch gekennzeichnet, dass** die mindestens eine Sensoreinheit (9) als Durchflussmesser, Druckmesser oder Temperaturmesser ausgebildet ist.

5. Servoventil nach Anspruch 4, **dadurch gekennzeichnet, dass** die mindestens eine als Durchflussmesser ausgebildete Sensoreinheit (9) ein im fluiddurchströmten Bereich angeordnetes Flügelrad (9.1) und einen außerhalb des fluiddurchströmten Bereichs angeordneten Sensor (9.2) zur Erfassung von Bewegungen des Flügelrads (9.1) aufweist.

6. Servoventil nach Anspruch 5, **dadurch gekennzeichnet, dass** das Flügelrad (9.1) eine sich entlang des Strömungswegs erstreckende Welle (9.1.1) und mehrere Flügel (9.1.2) aufweist, welche sich von der Welle (9.1.1) in radialer Richtung quer oder schräg zum Strömungsweg erstrecken.

7. Servoventil nach Anspruch 6, **dadurch gekennzeichnet, dass** die Welle (9.1.1) in radialer Richtung über eine an dem Ventilgehäuse (4) vorgesehene erste Lagerstelle (10) und eine an einem Lagereinsatz (11) vorgesehene zweite Lagerstelle (12) drehbar gelagert ist.

8. Servoventil nach Anspruch 6 oder 7, **dadurch gekennzeichnet, dass** die Welle (9.1.1) in axialer Richtung über mindestens ein Axiallager (34) gelagert ist.

9. Servoventil nach Anspruch 7, **dadurch gekennzeichnet, dass** die erste Lagerstelle (10) über mehrere sich kreuz- oder sternförmig quer zum Strömungsweg erstreckende Speichen (13) einstückig an dem Ventilgehäuse (4) angeordnet ist.

10. Servoventil nach einem der Ansprüche 7 bis 9, **dadurch gekennzeichnet, dass** der Lagereinsatz (11) als Richtungsgeber zur Lenkung des Fluidstroms auf das Flügelrad (9.1) ausgebildet ist.

11. Servoventil nach einem der Ansprüche 6 bis 10, **dadurch gekennzeichnet, dass** die Welle (9.1.1) mehrere axial getrennte Wellensegmente (W) aufweist.

12. Servoventil nach einem der Ansprüche 6 bis 11, **dadurch gekennzeichnet, dass** das Flügelrad (9.1) zumindest teilweise magnetische Eigenschaften aufweist und der Sensor (9.2) zur Erfassung von Magnetfeldern ausgebildet ist.

13. Servoventil nach Anspruch 12, **dadurch gekennzeichnet, dass** das Flügelrad (9.1) einen Magneteinsatz (9.1.3) aufweist, welcher zwischen zwei Wellensegmenten (W) angeordnet ist.

14. Servoventil nach Anspruch 13, **dadurch gekennzeichnet, dass** der Magneteinsatz (9.1.3) derart ausgebildet und angeordnet ist, dass sich dieser im Wesentlichen quer zum Strömungsweg erstreckt.

15. Servoventil nach einem der vorhergehenden Ansprüche, **dadurch gekennzeichnet, dass** sich der Ventileinlass (5) und der Ventilauslass (6) entlang einer Strömungsrichtung (R) parallel oder koaxial zueinander erstrecken.
